(19) Europäisches Patentamt
European Patent Office
Office européen des brevets

(11) **EP 2 484 643 B1**

(12) **EUROPEAN PATENT SPECIFICATION**

(45) Date of publication and mention
of the grant of the patent:
**18.09.2013 Bulletin 2013/38**

(51) Int Cl.:
***C03B 37/018*** (2006.01)    ***C03B 37/012*** (2006.01)

(21) Application number: **12153444.0**

(22) Date of filing: **01.02.2012**

(54) **Method for producing a glass optical fiber preform**

Verfahren zur Herstellung einer Vorform aus Glas für optische Fasern

Procédé de production d'une préforme en verre pour des fibres optiques

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2011 JP 2011021997**

(43) Date of publication of application:
**08.08.2012 Bulletin 2012/32**

(73) Proprietor: **Sumitomo Electric Industries, Ltd.**
**Osaka-shi, Osaka 541-0041 (JP)**

(72) Inventors:
• **Tamura, Yoshiaki**
**Kanagawa (JP)**
• **Hirano, Masaaki**
**Kanagawa (JP)**
• **Haruna, Tetsuya**
**Kanagawa (JP)**

(74) Representative: **HOFFMANN EITLE**
**Patent- und Rechtsanwälte**
**Arabellastrasse 4**
**81925 München (DE)**

(56) References cited:
**WO-A1-90/13834          US-A1- 2005 144 986**
**US-A1- 2005 201 699**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a method for producing an optical fiber preform.

Description of the Related Art

Japanese Unexamined Patent Application Publication (Translation of PCT Application) Nos. 2007-504080 and 2009-5411796 and U.S. Patent Application Publication No. 2005/0144986 describe optical fibers composed of silica-based glass, each of the optical fibers including an alkali metal-doped core region. The doping of a core part of an optical fiber preform with the alkali metal in a concentration of several hundreds to several millions of atomic parts per million reduces the viscosity of the core part during the drawing of the optical fiber preform. This allows the relaxation of the network structure of the silica glass to proceed, thereby reducing the Rayleigh scattering loss of an optical fiber produced by drawing the preform.

US- A- 2005/0144986 discloses a method for manufacturing an optical fiber preform doped with an alkali metal oxide by forming a core cane, forming a sleeve tube, inserting the core cane into the sleeve, flowing a mixture of oxygen and an alkali metal vapor between the core cane and the sleeve, and collapsing the sleeve around the core cane to form an optical fiber precursor. The collapse step may be accomplished by moving an assembly of the sleeve and the core cane through a furnace or moving the furnace parallel to the longitudinal axis of the assembly while the assembly remains stationary. Next, the optical fiber precursor is stretched into a second core cane. A cladding portion is then formed around the second core cane to form an overclad assembly and the overclad assembly is consolidated to form the alkali metal oxide doped optical fiber preform.

As a method for doping a silica glass with an alkali metal, a diffusion method is known. In the diffusion method, a glass pipe composed of the silica-based glass is heated to 1500°C to 2000°C with an external heat source or a plasma is generated in the glass pipe while the vapor of an alkali metal or alkali metal salt (e.g., KBr or KI), which serves as a raw material, is fed into the glass pipe together with oxygen. Thereby, the inner surface of the glass pipe is doped with the alkali metal element by diffusion.

After the glass pipe is doped with the alkali metal element, the diameter of the resulting glass pipe is reduced. After the reduction in diameter, the inner surface of the glass pipe is etched to remove transition metals, such as Ni and Fe, which are contaminants incorporated during the doping of the glass pipe with the alkali metal element. After the etching, the glass pipe is collapsed to form an alkali metal-doped core rod. A cladding part is formed on the outside of the alkali metal-doped core rod to produce an optical fiber preform. The optical fiber preform is drawn to produce an optical fiber.

For an alkali metal-containing silica glass, the glass transition temperature is as low as 1000°C to 1400°C, and the rate of crystallization is high. Thus, in the production of an optical fiber preform, in the steps of heating and cooling an alkali metal doped-glass, the glass is likely to crystallize, disadvantageously reducing the yield of a satisfactory optical fiber preform. In the case where a high-purity silica glass article is formed by a vapor-phase method, in a step of drying a silica glass soot article with chlorine gas, the silica glass article is contaminated with chlorine. The reaction of chlorine and an alkali metal in the silica glass forms an alkali chloride. The alkali chloride is not included in the network of the silica glass. Thus, the alkali chloride causes voids or serves as crystallization nuclei in the production process of an optical fiber preform.

The presence of voids and crystallization nuclei in an optical fiber preform (in particular, a core part) causes an increase in the attenuation of an optical fiber produced by drawing the optical fiber preform. In particular, in an etching step of etching the inner surface of the silica glass tube, the silica glass tube is heated with a high concentration of an alkali oxide exposed at the inner surface of the silica glass tube, so that voids and crystals are likely to be formed. An optical fiber produced by drawing such an optical fiber preform including a core part having voids and crystals has high attenuation.

SUMMARY OF THE INVENTION

Accordingly, it is an object of the present invention to provide a method for producing an optical fiber preform suitably used for the production of an optical fiber having low attenuation.

According to a first aspect of the present invention, a method for producing an optical fiber preform that includes a core part and a cladding part, the optical fiber preform being composed of a silica-based glass, includes an etching step of heating a silica-based glass tube having the inner surface doped with an alkali metal element using a heat source continuously traversed in the longitudinal direction of the glass tube to etch the inner surface portion by 5% or more of the thickness of a region where the alkali metal element is diffused while an etching gas is allowed to flow into the glass tube, and after the etching step, a collapse step of collapsing the glass tube by heating the glass tube with a heat source continuously traversed in the longitudinal direction of the glass tube to form a first glass rod to be formed into a core part or part of a core part of an optical fiber, in which the glass tube has a maximum alkali metal concentration of 500 to 20,000 atomic ppm, a maximum chlorine concentration of 0 to 1000 atomic ppm, and a maximum fluorine concentration of 0 to 10,000 atomic ppm, and in which in the etching step, the maximum temperature of the outer surface of the glass tube is in the range of 1900°C to 2250°C, and the heating time is set to a time equal to or less than a time (min) given by

$$\left( 7 - \frac{alkali\ metal\ concentration\quad ppm}{5000} \right).$$

According to a second aspect of the present invention, a method for producing an optical fiber preform that includes a core part and a cladding part, the optical fiber preform being composed of a silica-based glass, includes an etching step of heating a silica-based glass tube having the inner surface doped with an alkali metal element using a heat source continuously traversed in the longitudinal direction of the glass tube to etch the inner surface portion by 5% or more of the thickness of a region where the alkali metal element is diffused while an etching gas is allowed to flow into the glass tube, and after the etching step, a collapse step of collapsing the glass tube by heating the glass tube with a heat source continuously traversed in the longitudinal direction of the glass tube to form a first glass rod to be formed into a core part or part of a core part of an optical fiber, in which the glass tube has a maximum alkali metal concentration of 500 to 20,000 atomic ppm, a maximum chlorine concentration of 0 to 1000 atomic ppm, and a maximum fluorine concentration of 0 to 10,000 atomic ppm, and in which in the etching step, the maximum temperature of the outer surface of the glass tube is in the range of 1900°C to 2250°C, and the traverse speed of the heat source is in the range of 50 mm/min to 100 mm/min.

In the method for producing an optical fiber preform according to any one of the aspects of the present invention, in the etching step, the inner surface portion of the glass tube is preferably etched by 5% to 25% of the thickness of the region where the alkali metal element is diffused. In the method for producing an optical fiber preform according to any one of the aspects of the present invention, in the etching step, a pressure inside the glass tube is preferably 0.1 to 1 kPa higher than a pressure outside the glass tube. In the method for producing an optical fiber preform according to any one of the aspects of the present invention, the maximum value of the relative refractive index difference of the first glass rod is preferably in the range of -0.1% to +0.1%, and the method may further include a cladding part formation step of forming an optical cladding part or part of an optical cladding part around the perimeter of the first glass rod, in which the minimum value of the relative refractive index difference of the optical cladding part is preferably in the range of -0.2% to -0.5%. In this specification, the term "relative refractive index difference" indicates a value with respect to the refractive index of pure silica glass, unless otherwise specified, i.e., $\dfrac{\Delta_{object} - \Delta_{pure\ silica}}{\Delta_{pure\ silica}}$.

Preferably, the method for producing an optical fiber preform according to any one of the aspects of the present invention further includes a core part diameter extension step of arranging a silica glass having a chlorine concentration of 1000 atomic ppm to 15, 000 atomic ppm around the perimeter of the first glass rod formed in the collapse step to form a second glass rod to be formed into a core part or part of a core part of an optical fiber. In this case, the maximum value of the relative refractive index difference of the second glass rod is preferably in the range of- 0.1% to +0.1%, and the method may further include a cladding part formation step of forming an optical cladding part or part of an optical cladding part around the perimeter of the second glass rod, in which the minimum value of the relative refractive index difference of the optical cladding part is preferably in the range of- 0.2% to- 0.5%.

According to the present invention, it is possible to produce an optical fiber preform suitably used for the production of an optical fiber having low attenuation.

BRIEF DESCRIPTION OF THE DRAWINGS

Figure 1 illustrates a flowchart of a method for producing an optical fiber preform according to an embodiment of the present invention.

Figures 2A to 2D are conceptual drawings illustrating alkali metal addition step S 1 in the flowchart in Fig. 1.

Figure 3 is a graph illustrating the presence or absence of the occurrence of crystallization as a function of the maximum temperature in a heated portion in an etching step and the potassium concentration.

Figure 4 is a conceptual drawing illustrating the presence or absence of the occurrence of crystallization as a function of the heating time in the etching step and the potassium concentration.

Figure 5 is a graph illustrating the presence or absence of the occurrence of crystallization as a function of the traverse speed in the etching step and the potassium concentration.

DESCRIPTION OF THE PREFERRED EMBODIMENTS

Embodiments of the present invention will be described below with reference to the attached drawings. The embodiments are provided solely for purposes of illustration and are not intended to be limitative. In the drawings, the same elements are designated using the same reference numerals, and descriptions are not redundantly repeated. The ratios of dimensions in the drawings are not always accurate.

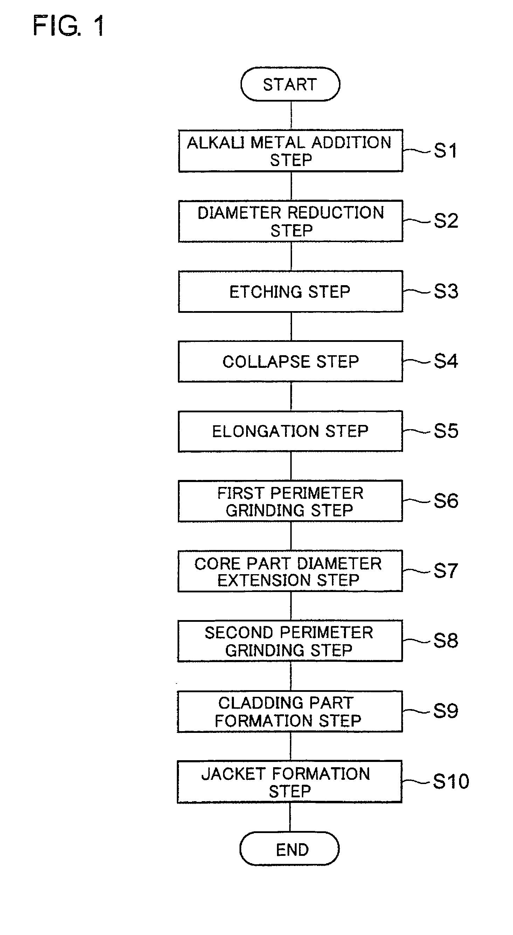

Figure 1 illustrates a flowchart of a method for producing an optical fiber preform according to an embodiment of the present invention. The method for producing an optical fiber preform according to this embodiment includes alkali metal addition step S1, diameter reduction step S2, etching step S3, collapse step S4, elongation step S5, first perimeter grinding step S6, core part diameter extension step S7, second perimeter grinding step S8, cladding part formation step S9, and jacket formation step S10. These steps are sequentially performed to produce an optical fiber preform including a core part and a cladding part and being composed of a silica-based glass.

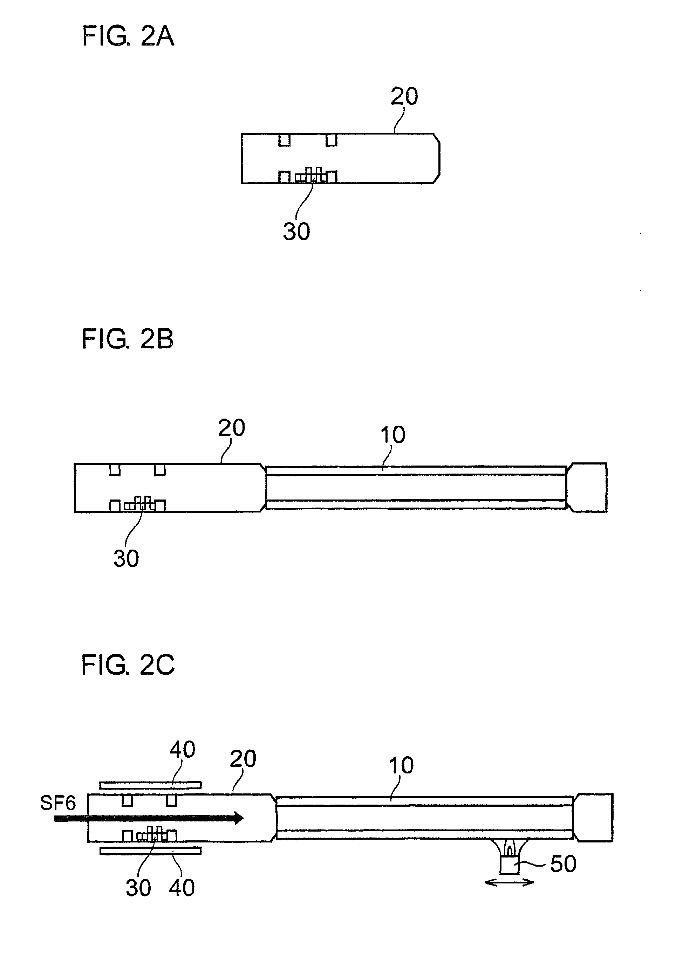

Figures 2A to 2D illustrate alkali metal addition step S 1 in the flowchart in Fig. 1. In alkali metal addition step S1, the inner surface of a glass tube 10 composed of a silica-based glass (hereinafter, referred to as a "silica glass tube 10") is doped with an alkali metal. As the alkali metal added, potassium is preferably used. Sodium, rubidium, and cesium may also be used. The silica glass tube 10 has a maximum chlorine concentration of 0 to 1000 atomic ppm and a maximum fluorine concentration of 0 to 10,000 atomic ppm. The concentrations of contaminants other than chlorine and fluorine, for example, transition metals and OH groups, are sufficiently low and are preferably, for example, 10 mol ppb or less. For example, the concentration of chlorine is 200 atomic ppm. The maximum concentration of fluorine is 4000 atomic ppm. The outside diameter is 25 mm. The inside diameter is 10 mm.

As illustrated in Fig. 2A, a supporting pipe 20 to be connected to an end of the silica glass tube 10 has a source-material supply portion with a reduced inside diameter. A KBr source 30 is placed in the source-material supply portion. As illustrated in Fig. 2B, the silica glass tube 10 is connected to the supporting pipe 20. The resulting article is mounted on a lathe.

Dry $N_2$ gas fed from a gas supply unit (not illustrated) is allowed to flow from the supporting pipe 20 to the silica glass tube 10 to dry the KBr source 30 placed in the source-material supply portion while the source-material supply portion of the supporting pipe 20 is heated to 600°C for 30 minutes with an electric furnace 40. Then, as illustrated in Fig. 2C, $SF_6$ gas is allowed to flow from the supporting pipe 20 to the silica glass tube 10 to etch a predetermined thickness of the inner surface of the silica glass tube 10, thereby removing impurities attached to the inner surface of the silica glass tube 10.

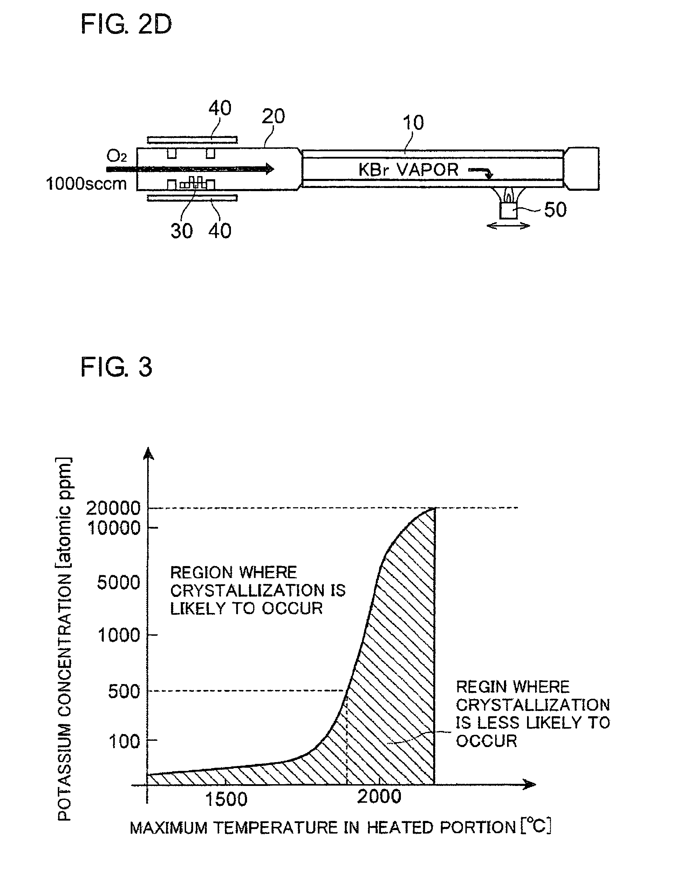

As illustrated in Fig. 2D, $O_2$ gas fed from a gas supply unit (not illustrated) is allowed to flow from the supporting pipe 20 to the silica glass tube 10 while the source-material supply portion of the supporting pipe 20 is heated to 780°C with the electric furnace 40, so that KBr vapor generated from the KBr source 30 placed in the source-material supply portion is allowed to flow into the silica glass tube 10 together with the $O_2$ gas. The silica glass tube 10 is heated from the outside thereof with a heat source, such as an oxyhydrogen burner 50, in such a manner that the maximum outer surface temperature is in the range of 2000°C to 2250°C. Consequently, the silica glass tube 10 is doped with potassium flowing therethrough by diffusion. After the alkali metal addition step S1, the silica glass tube 10 has a maximum potassium concentration of 500 to 20,000 atomic ppm.

In diameter reduction step S2, after the supply of KBr vapor by heating the source-material supply portion, heating is continued with the oxyhydrogen burner 50 to reduce the diameter of the glass tube until the inside diameter of the glass tube reaches about 3 mm.

In etching step S3, the glass tube is heated to the maximum temperature of 1900°C to 2250°C with the oxyhydrogen burner continuously traversed at a speed of 50 mm/min to 100 mm/min while $SF_6$ and $O_2$ are allowed to flow into the glass tube having a reduced inside diameter at a flow rate of 100 sccm (100 cc/min in terms of standard conditions) and 100 sccm, respectively. Preferably, $SF_6$ is used as an etching gas. Other examples of the etching gas that may be used include $CF_4$, $NF_3$, and $C_2F_6$. Thereby, the inner surface of the glass tube is etched by a thickness of about 400 to about 800 $\mu$m to  remove a layer containing impurities, such as transition metals and OH groups, incorporated during the step of diffusing potassium, the layer having a high impurity concentration (e.g., 10 mol ppb or more).

The etching step is performed under the conditions, thus inhibiting the occurrence of the crystallization during the etching step. A maximum alkali metal concentration of 500 atomic ppm or more results in a reduction in the viscosity of the core, thereby reducing the scattering loss. A maximum alkali metal concentration of 20,000 atomic ppm or more results in a very high crystallization rate, thus causing difficulty in inhibiting the occurrence of the crystallization during the etching step.

A high chlorine concentration in the silica glass leads to the formation of KCl in the silica glass. KCl serves as a nucleus to cause the crystallization of the silica glass to proceed. Thus, the maximum chlorine concentration is preferably 1000 atomic ppm or less. A high fluorine concentration leads to the scattering loss due to fluorine and leads to a reduction in the refractive index of the core, causing difficulty in forming a waveguide structure. Thus, the maximum fluorine concentration is preferably in the range of 0 to 10,000 atomic ppm.

With respect to the heat source, an oxyhydrogen burner may be used. Dry heat sources, such as electric furnaces and thermal plasmas, are preferably used. The heating temperature is preferably 1900°C or higher to inhibit the formation of crystals. However, it is difficult to increase the glass temperature to 2250°C or higher. At a potassium concentration of 500 ppm to 20,000 ppm, the heating time (time obtained by dividing the length of a portion heated to 800°C or higher with a stopped burner by the traverse speed of the burner) is set to a time shorter than a time (min) given by $\left( 7 - \dfrac{alkali\ metal\ concentration\quad ppm}{5000} \right)$, thereby inhibiting the crystallization. At a potassium concentration of 25,000 ppm, the rate of crystallization is high. The crystallization occurs even at a short heating time of 1.5 minutes. Even if the heating time is set to less than 1.5 minutes, it is difficult to inhibit the crystallization because the temperature of the glass tube does not reach 1900°C or higher. A traverse speed of the heat source of 50 mm/min or more also results in the inhibition of the crystallization. If the traverse speed is very high, the glass tube is not sufficiently heated, thus failing to be etched. Consequently, the traverse speed is preferably 100 mm/min or less.

In etching step S3, the inner surface of the glass tube is preferably etched by 5% to 25% of the thickness of a region where the alkali metal element is diffused. Transition metals (e.g., Fe, Ni, and Co) contained in the source material or the carrier gas are diffused into the glass simultaneously with the diffusion of the alkali metal. The diffusion velocities of transition metals are lower than those of alkali metals. Thus, removal of 5% or more of the thickness of the alkali metal-doped region by etching permits an increase in attenuation due to impurities to be reduced to 0.001 dB/km or less at a wavelength of 1.55 $\mu$m, with potassium remaining. In the case where a thickness to be removed by the etching is as large as 25% or more, the alkali metal addition step is uneconomical, thus increasing the production cost of an optical fiber.

In etching step S3, the pressure inside the glass tube is preferably set to a pressure 0.1 to 1 kPa higher than the pressure outside the glass tube. In this case, the glass tube can be etched at a high temperature without being collapsed.

In collapse step S4, the surface of the glass tube is heated to 2000°C to 2250°C with a heat source, such as a flame from an oxyhydrogen burner, continuously traversed in the longitudinal direction of the glass tube at a traverse speed of 30 mm/min to 100 mm/min while a pressure inside the glass tube is set to a pressure at least 90 kPa lower than a pressure outside the glass tube, thereby collapsing the glass tube to form a transparent glass rod (first glass rod) composed of a silica-based glass. In collapse step S4, a large difference in pressure between the inside and outside of the glass tube makes it possible to efficiently increase the speed of the traverse, which is preferred.

In elongation step S5, the glass rod formed in the collapse step S4 is elongated while the glass rod is heated with a heat source, such as an oxyhydrogen burner, in such a manner that the outside diameter is 11 mm. In first perimeter grinding step S6, the perimeter of the glass rod is ground in such a manner that the outside diameter is 6 mm. This removes a silica glass layer where OH groups are diffused by heating with the oxyhydrogen burner. This also allows the glass rod to have a substantially perfect circular cross section. The term "substantially perfect circular cross section" indicates that the cross section has a non-circularity of 0.4% or less (the non-circularity indicating a value obtained by dividing a difference in length between the major axis and the minor axis by the length of the major axis when the perimeter of the glass rod is approximated as an ellipse).

It is known that in the case where a glass tube is collapsed at a large different in pressure between the inside and outside of the glass tube, the resulting glass rod has an elliptic cross section. In this case, a region doped with an alkali metal also has an elliptic cross section. After the outside of the glass rod is ground in such a manner that the glass rod has a substantially perfect circular cross section, when an optical fiber preform including the glass rod serving as a core part or serving partially as a core part is produced and drawn by a known method, the polarization mode dispersion of the resulting optical fiber is not degraded. The reason for this is as follows: An alkali metal has a high diffusion coefficient ($1 \times 10^{-6}$ cm$^2$/s) at 1500°C. Thus, the alkali metal is diffused in a portion by heating during the drawing, the portion having a volume several to several tens of times that of the region doped with the alkali metal. Consequently, the alkali metal is distributed in a region having a diameter several times the mode field diameter of the optical fiber. Note that before the first perimeter grinding step, the step of elongating the silica glass rod may not be provided.

In core part diameter extension step S7, a silica glass having a chlorine concentration of 1000 atomic ppm to 15,000 atomic ppm is arranged around the glass rod whose perimeter has been ground in first perimeter grinding step S6, thereby forming a glass rod having an extended portion (second glass rod). The silica glass will be formed into a core part or part of a core part of an optical fiber.

In core part diameter extension step S7, the increase in the diameter of the core part provides a large-sized optical fiber preform, thus reducing the production cost of the optical fiber preform and the optical fiber. A central portion derived from the glass rod formed in the collapse step before the diameter extension has a small diameter in a fiber state, so that the proportion of light propagating the central portion is low. This reduces the influence of transition metals and OH groups, which can be incorporated together with the addition of an alkali oxide, on attenuation, thereby reducing the attenuation. The ratio of the perimeter of the glass rod after the diameter extension to the perimeter of the glass rod before the diameter extension is preferably in the range of 2 to 10.

In second perimeter grinding step S8, the perimeter of the glass rod having the extended portion formed in core part diameter extension step S7 is ground in such a manner that the glass rod has a substantially perfect circular cross section. Note that core part diameter extension step S7 and second perimeter grinding step S8 may not be performed.

In cladding part formation step S9, an optical cladding part is formed around the perimeter of the resulting glass rod. The maximum refractive index of the glass rod is higher than the minimum refractive index of the optical cladding part. In particular, preferably, the glass rod to be formed into a core or part of a core of an optical fiber contains the alkali metal, chlorine, and fluorine, the concentration of other contaminants being 10 ppb or less. In this case, the maximum value of the relative refractive index difference of the glass rod is preferably in the range of -0.1% to +0.1%. The optical cladding part is preferably composed of a fluorine-doped silica glass. In the case where the fluorine concentration is as high as 45,000 atomic ppm or more and where the relative refractive index difference is -0.5% or less, the attenuation is increased. Thus, the minimum value of the relative refractive index difference of the optical cladding part is preferably in the range of -0.2% to -0.5%.

The formation of the optical cladding part provides an optical fiber preform through which a low loss optical fiber can be made. The relative refractive index difference between the maximum value in the core part and the minimum value in the optical cladding is preferably in the range of 0.2% to 0.6%. A silica glass to be formed into a physical cladding part may be arranged outside the optical cladding part.

In jacket formation step S 10, a jacket part to be formed into a physical cladding part is formed by a known method, for example, the VAD method, the OVD method, or the rod-in-tube method, thereby providing an optical fiber preform. Drawing the optical fiber preform produces an optical fiber.

The optical fiber produced as described above has low attenuation. That is, it is possible to produce an optical fiber preform by the method for producing an optical fiber preform according to an embodiment of the present invention, the optical fiber preform being suitable for the production of an optical fiber having low attenuation.

In a drawing step, the alkali metal is diffused into the optical cladding part, thus reducing the viscosities of the core part and the optical cladding part compared with the jacket part. As a result, compressive strain remains in the core part and the optical cladding part of the resulting optical fiber. If tensile strain remains in the core part of an optical fiber, density fluctuations in the $SiO_2$ network structure of the glass are increased, thus disadvantageously increasing the attenuation. In the optical fiber according to the present invention, the compressive strain remains in the core part, eliminating an increase in attenuation. It is thus possible to provide the optical fiber having low attenuation.

The fictive temperature of the core part of the optical fiber may be set to 1500°C or lower. The fictive temperature is determined by Raman spectroscopy and indicates a temperature of a supercooled state which has the same structure as the glass. A lower fictive temperature results in the relaxation of the density fluctuations of the glass, thereby reducing the Rayleigh scattering loss. It is thus possible to provide the optical fiber having low attenuation.

Furthermore, the attenuation of the optical fiber may be set to 0.175 dB/km or less at a wavelength of 1550 nm. The optical fiber having low attenuation is suitable for long distance transmission. The attenuation is preferably 0.170 dB/km or less and more preferably 0.165 dB/km or less at a wavelength of 1550 nm.

Figure 3 is a graph illustrating the presence or absence of the occurrence of crystallization as a function of the potassium concentration and the maximum temperature in a heated portion when etching is performed at a traverse speed of 100 mm/min. In the etching step, when the maximum temperature of the outer surface of the glass tube is in the range of 1900°C to 2250°C, the occurrence of the crystallization is inhibited.

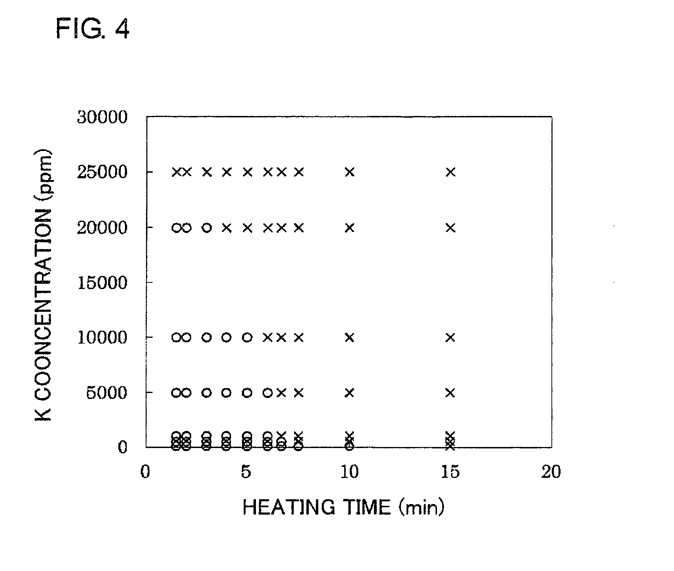

Figure 4 is a conceptual drawing illustrating the presence or absence of the occurrence of crystallization as a function of the heating time in the etching step and the potassium concentration. Symbol "o" denotes uncrystallized and symbol "x" denotes crystallized. The potassium concentrations and the heating times in examples are described in Table. The results demonstrated that at a potassium concentration of 500 ppm to 20,000 ppm, the heating time is set to a time shorter than a time (min) given by $\left( 7 - \dfrac{potassium\ concentration\quad ppm}{5000} \right)$, thereby inhibiting the crystallization.

Table

| K concentration (atomic ppm) | Traverse speed (mm/min) | Heating length (mm) | Heating time (min) | Crystal state |
|---|---|---|---|---|
| 100 | 20 | 150 | 7.5 | uncrystallized |
| 100 | 20 | 200 | 10 | uncrystallized |
| 100 | 20 | 300 | 15 | crystallized |
| 100 | 30 | 150 | 5 | uncrystallized |
| 100 | 30 | 200 | 6.7 | uncrystallized |
| 100 | 30 | 300 | 10 | uncrystallized |
| 100 | 50 | 150 | 3 | uncrystallized |
| 100 | 50 | 200 | 4 | uncrystallized |
| 100 | 50 | 300 | 6 | uncrystallized |
| 100 | 100 | 150 | 1.5 | uncrystallized |
| 100 | 100 | 200 | 2 | uncrystallized |
| 100 | 100 | 300 | 3 | uncrystallized |
| 500 | 20 | 150 | 7.5 | crystallized |
| 500 | 20 | 200 | 10 | crystallized |
| 500 | 20 | 300 | 15 | crystallized |
| 500 | 30 | 150 | 5 | uncrystallized |
| 500 | 30 | 200 | 6.7 | uncrystallized |
| 500 | 30 | 300 | 10 | crystallized |
| 500 | 50 | 150 | 3 | uncrystallized |
| 500 | 50 | 200 | 4 | uncrystallized |
| 500 | 50 | 300 | 6 | uncrystallized |
| 500 | 100 | 150 | 1.5 | uncrystallized |
| 500 | 100 | 200 | 2 | uncrystallized |
| 500 | 100 | 300 | 3 | uncrystallized |
| 1000 | 20 | 150 | 7.5 | crystallized |
| 1000 | 20 | 200 | 10 | crystallized |
| 1000 | 20 | 300 | 15 | crystallized |
| 1000 | 30 | 150 | 5 | uncrystallized |
| 1000 | 30 | 200 | 6.7 | crystallized |
| 1000 | 30 | 300 | 10 | crystallized |
| 1000 | 50 | 150 | 3 | uncrystallized |
| 1000 | 50 | 200 | 4 | uncrystallized |
| 1000 | 50 | 300 | 6 | uncrystallized |
| 1000 | 100 | 150 | 1.5 | uncrystallized |
| 1000 | 100 | 200 | 2 | uncrystallized |
| 1000 | 100 | 300 | 3 | uncrystallized |
| 5000 | 20 | 150 | 7.5 | crystallized |

(continued)

| K concentration (atomic ppm) | Traverse speed (mm/min) | Heating length (mm) | Heating time (min) | Crystal state |
|---|---|---|---|---|
| 5000 | 20 | 200 | 10 | crystallized |
| 5000 | 20 | 300 | 15 | crystallized |
| 5000 | 30 | 150 | 5 | uncrystallized |
| 5000 | 30 | 200 | 6.7 | crystallized |
| 5000 | 30 | 300 | 10 | crystallized |
| 5000 | 50 | 150 | 3 | uncrystallized |
| 5000 | 50 | 200 | 4 | uncrystallized |
| 5000 | 50 | 300 | 6 | uncrystallized |
| 5000 | 100 | 150 | 1.5 | uncrystallized |
| 5000 | 100 | 200 | 2 | uncrystallized |
| 5000 | 100 | 300 | 3 | uncrystallized |
| 10000 | 20 | 150 | 7.5 | crystallized |
| 10000 | 20 | 200 | 10 | crystallized |
| 10000 | 20 | 300 | 15 | crystallized |
| 10000 | 30 | 150 | 5 | crystallized |
| 10000 | 30 | 200 | 6.7 | crystallized |
| 10000 | 30 | 300 | 10 | crystallized |
| 10000 | 50 | 150 | 3 | uncrystallized |
| 10000 | 50 | 200 | 4 | uncrystallized |
| 10000 | 50 | 300 | 6 | crystallized |
| 10000 | 100 | 150 | 1.5 | uncrystallized |
| 10000 | 100 | 200 | 2 | uncrystallized |
| 10000 | 100 | 300 | 3 | uncrystallized |
| 20000 | 20 | 150 | 7.5 | crystallized |
| 20000 | 20 | 200 | 10 | crystallized |
| 20000 | 20 | 300 | 15 | crystallized |
| 20000 | 30 | 150 | 5 | crystallized |
| 20000 | 30 | 200 | 6.7 | crystallized |
| 20000 | 30 | 300 | 10 | crystallized |
| 20000 | 50 | 150 | 3 | uncrystallized |
| 20000 | 50 | 200 | 4 | crystallized |
| 20000 | 50 | 300 | 6 | crystallized |
| 20000 | 100 | 150 | 1.5 | uncrystallized |
| 20000 | 100 | 200 | 2 | uncrystallized |
| 20000 | 100 | 300 | 3 | uncrystallized |
| 25000 | 20 | 150 | 7.5 | crystallized |
| 25000 | 20 | 200 | 10 | crystallized |

(continued)

| K concentration (atomic ppm) | Traverse speed (mm/min) | Heating length (mm) | Heating time (min) | Crystal state |
|---|---|---|---|---|
| 25000 | 20 | 300 | 15 | crystallized |
| 25000 | 30 | 150 | 5 | crystallized |
| 25000 | 30 | 200 | 6.7 | crystallized |
| 25000 | 30 | 300 | 10 | crystallized |
| 25000 | 50 | 150 | 3 | crystallized |
| 25000 | 50 | 200 | 4 | crystallized |
| 25000 | 50 | 300 | 6 | crystallized |
| 25000 | 100 | 150 | 1.5 | crystallized |
| 25000 | 100 | 200 | 2 | crystallized |
| 25000 | 100 | 300 | 3 | crystallized |

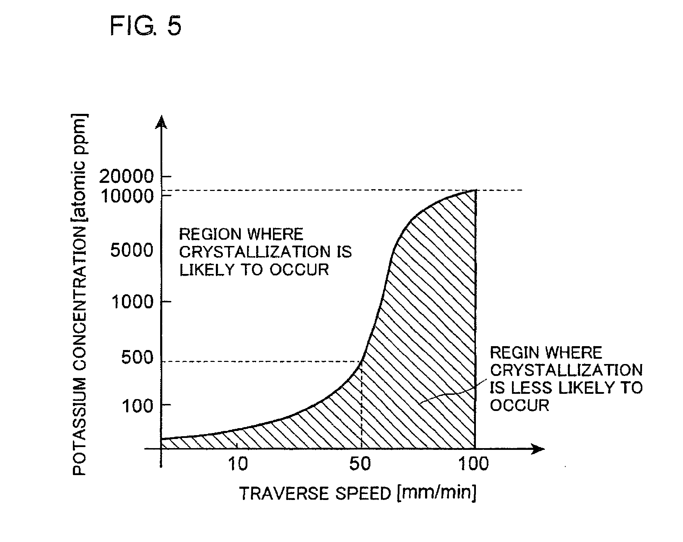

Figure 5 is a graph illustrating the presence or absence of the occurrence of crystallization as a function of the potassium concentration and the traverse speed when etching is performed at 2250°C. In the etching step, when the traverse speed of the heat source is in the range of 50 mm/min to 100 mm/min, the occurrence of the crystallization is inhibited.

As a comparative example, in the etching step, a glass tube was etched by heating the outer surface with a flame, having a temperature of 1900°C, from an oxyhydrogen burner traversed at a traverse speed of 5 mm/min while $SF_6$ (100 sccm) and $O_2$ (100 sccm) were allowed to flow. In this case, the inner surface of the glass tube was whitened. For such a crystallized glass tube, in the subsequent collapse step, the interstitial spaces and so forth of the crystals remain in the form of voids. It is thus difficult to form a void-free glass rod.

## Claims

1. A method for producing an optical fiber preform that includes a core part and a cladding part, the optical fiber preform being composed of a silica-based glass, the method comprising:

   an etching step of heating a silica-based glass tube having the inner surface doped with an alkali metal element using a heat source continuously traversed in the longitudinal direction of the glass tube to etch the inner surface portion by 5% or more of the thickness of a region where the alkali metal element is diffused while an etching gas is allowed to flow into the glass tube; and
   after the etching step, a collapse step of collapsing the glass tube by heating the glass tube with a heat source continuously traversed in the longitudinal direction of the glass tube to form a first glass rod to be formed into a core part or part of a core part of an optical fiber,
   wherein the glass tube has a maximum alkali metal concentration of 500 to 20,000 atomic ppm, a maximum chlorine concentration of 0 to 1000 atomic ppm, and a maximum fluorine concentration of 0 to 10,000 atomic ppm, and
   wherein in the etching step, the maximum temperature of the outer surface of the glass tube is in the range of 1900°C to 2250°C, and the heating time is set to a time equal to or less than a time (min) given by

$$\left( 7 - \frac{alkali\ metal\ concentration \quad ppm}{5000} \right).$$

2. A method for producing an optical fiber preform that includes a core part and a cladding part, the optical fiber preform being composed of a silica-based glass, the method comprising:

   an etching step of heating a silica-based glass tube having the inner surface doped with an alkali metal element using a heat source continuously traversed in the longitudinal direction of the glass tube to etch the inner surface portion by 5% or more of the thickness of a region where the alkali metal element is diffused while an etching gas is allowed to flow into the glass tube; and
after the etching step, a collapse step of collapsing the glass tube by heating the glass tube with a heat source continuously traversed in the longitudinal direction of the glass tube to form a first glass rod to be formed into a core part or part of a core part of an
optical fiber,
wherein the glass tube has a maximum alkali metal concentration of 500 to 20,000 atomic ppm, a maximum chlorine concentration of 0 to 1000 atomic ppm, and a maximum fluorine concentration of 0 to 10,000 atomic ppm, and
wherein in the etching step, the maximum temperature of the outer surface of the glass tube is in the range of 1900°C to 2250°C, and the traverse speed of the heat source is in the range of 50 mm/min to 100 mm/min.

3.  The method according to Claim 1 or 2, wherein in the etching step, the inner surface portion of the glass tube is etched by 5% to 25% of the thickness of the region where the alkali metal element is diffused.

4.  The method according to any one of Claims 1 to 3, wherein in the etching step, a pressure inside the glass tube is 0.1 to 1 kPa higher than a pressure outside the glass tube.

5.  The method according to any one of Claims 1 to 4,
wherein the maximum value of the relative refractive index difference of the first glass rod is in the range of -0.1% to +0.1%, and the method further comprises:

    a cladding part formation step of forming an optical cladding part or part of an optical cladding part around the perimeter of the first glass rod,
    wherein the minimum value of the relative refractive index difference of the optical cladding part is in the range of -0.2% to -0.5%.

6.  The method according to any one of Claims 1 to 4, further comprising:

    a core part diameter extension step of arranging a silica glass having a chlorine concentration of 1000 atomic ppm to 15,000 atomic ppm around the perimeter of the first glass rod formed in the collapse step to form a second glass rod to be formed into a core part or part of a core part of an optical fiber.

7.  The method according to Claim 6,
wherein the maximum value of the relative refractive index difference of the second glass rod is in the range of -0.1% to +0.1%, and the method further comprises:

    a cladding part formation step of forming an optical cladding part or part of an optical cladding part around the perimeter of the second glass rod,
    wherein the minimum value of the relative refractive index difference of the optical cladding part is in the range of -0.2% to -0.5%.


**Patentansprüche**

1.  Verfahren zur Herstellung einer Vorform für optische Fasern, die einen Kernabschnitt und einen Mantelabschnitt umfasst, wobei die optische Faser aus einem Silika-basierten Glas besteht und das Verfahren umfasst:

    einen Ätzschritt des Heizens einer Silika-basierten Glasröhre, deren Innenfläche mit einem Alkalimetallelement dotiert ist, unter Verwendung einer Wärmequelle, die kontinuierlich in Längsrichtung der Glasröhre verfahren wird, um den Innenoberflächenabschnitt, um 5% oder mehr der Dicke eines Bereichs, in den Alkalimetallelement diffundiert ist, zu ätzen, während es einem Ätzgas ermöglicht ist, in die Glasröhre zu strömen; und
    nach dem Ätzschritt einen Kollabierschritt des Kollabierens der Glasröhre durch Heizen der Glasröhre mit einer Wärmequelle, die kontinuierlich in Längsrichtung der Glasröhre verfahren wird, um einen ersten Glasstab auszubilden, der zu einem Kernabschnitt oder Teil eines Kernabschnitts auszubilden ist,
    wobei die Glasröhre eine maximale
    Alkalimetallkonzentration von 500 bis 20000 atomaren ppm, eine maximale Chlorkonzentration von 0 bis 1000 atomaren ppm und eine maximale Fluorkonzentration von 0 bis 10000 atomaren ppm aufweist, und
    wobei im Ätzschritt die Maximaltemperatur der Außenfläche der Glasröhre im Bereich von 1900°C bis 2250°C liegt, und die Heizzeit auf eine Zeit gleich oder kürzer einer Zeit (in Min) eingestellt lst, die durch

$$\left(7 - \frac{Alkalimetallkonzentration\ ppm}{5000}\right)$$

vorgegeben ist.

2. Verfahren zur Herstellung einer Vorform für optische Fasern, die einen Kernabschnitt und einen Mantelabschnitt umfasst, wobei die optische Faser aus einem Silika-basierten Glas besteht und das Verfahren umfasst:

einen Ätzschritt des Heizens einer Silika-basierten Glasröhre, dessen Innenfläche mit einem Alkalimetallelement dotiert ist, unter Verwendung einer Wärmequelle, die kontinuierlich in Längsrichtung der Glasröhre verfahren wird, um den Innenflächenabschnitt, um 5% oder mehr der Dicke eines Bereichs, in den Alkalimetallelement diffundiert ist, zu ätzen, während es einem Ätzgas ermöglicht ist, in die Glasröhre zu strömen; und
nach dem Ätzschritt einen Kollabierschritt des Kollabierens der Glasröhre durch Heizen der Glasröhre mit einer Wärmequelle, die kontinuierlich in Längsrichtung der Glasröhre verfahren wird, um einen ersten Glasstab auszubilden, der zu einem Kernabschnitt oder Teil eines Kernabschnitts auszubilden ist,
wobei die Glasröhre eine maximale
Alkalimetallkonzentration von 500 bis 20000 atomaren ppm, eine maximale Chlorkonzentration von 0 bis 1000 atomaren ppm und eine maximale Fluorkonzentration von 0 bis 10000 atomaren ppm aufweist, und
wobei im Ätzschritt die Maximaltemperatur der Außenfläche der Glasröhre im Bereich von 1900°C bis 2250°C liegt, und die Verfahrgeschwindigkeit der Wärmequelle im Bereich von 50 mm/min bis 100 mm/min liegt.

3. Verfahren nach Anspruch 1 oder 2, wobei im Ätzschritt der Innenflächenabschnitt, um 5% bis 25% der Dicke eines Bereichs, in den Alkalimetallelement diffundiert ist, geätzt wird.

4. Verfahren nach einem der Ansprüche 1 bis 3, wobei im Ätzschritt ein Druck innerhalb der Glasröhre 0.1 kPa bis 1 kPa höher ist, als ein Druck außerhalb der Glasröhre.

5. Verfahren nach einem der Ansprüche 1 bis 4,
wobei der Maximalwert der relativen
Brechungsindexdifferenz des ersten Glasstabs im Bereich von - 0,1% bis +0,1% liegt, und das Verfahren ferner umfasst:
einen Mantelabschnitt-Ausbildungsschritt des Ausbildens eines optischen Mantelabschnitts oder Teils eines optischen Mantelabschnitts um den Umfang des ersten Glasstabs,
wobei der Minimalwert der relativen
Brechungsindexdifferenz des optischen Mantelabschnitts im Bereich von -0,2% bis -0,5% liegt.

6. Verfahren nach einem der Ansprüche 1 bis 4, ferner umfassend:

einen Schritt zum Ausweiten des Kernabschnittdurchmessers, bei dem ein Silikaglases mit einer Chlorkonzentration von 1000 atomaren ppm bis 15000 atomaren ppm um den Umfang des im Kollabierschritt ausgebildeten ersten Glasstabs angeordnet wird, um einen zweiten Glasstab auszubilden, der zu einem Kernabschnitt oder Teil eines Kernabschnitts auszubilden ist.

7. Verfahren nach Anspruch 6,
wobei der Maximalwert der relativen
Brechungsindexdifferenz des zweiten Glasstabs im Bereich von - 0,1% bis +0,1% liegt, und das Verfahren ferner umfasst:
einen Mantelabschnitt-Ausbildungsschritt des Ausbildens eines optischen Mantelabschnitts oder Teils eines optischen Mantelabschnitts um den Umfang des zweiten Glasstabs,
wobei der Minimalwert der relativen
Brechungsindexdifferenz des optischen Mantelabschnitts im Bereich von -0,2% bis -0,5% liegt.

**Revendications**

1. Procédé de production d'une préforme de fibre optique qui comprend une partie de coeur et une partie de gaine, la préforme de fibre optique étant composée d'un verre à base de silice, le procédé comprenant les étapes suivantes :

une étape d'attaque comprenant de chauffer un tube de verre à base de silice ayant la surface interne dopée avec un élément métallique alcalin au moyen d'une source de chaleur traversée de manière continue dans la direction longitudinale du tube de verre pour attaquer la partie de surface interne de 5 % ou plus de l'épaisseur d'une région où l'élément métallique alcalin est diffusé tandis qu'un gaz d'attaque est autorisé à s'écouler dans le tube de verre ; et

après l'étape d'attaque, une étape de compactage comprenant de compacter le tube de verre en chauffant le tube de verre avec une source de chaleur traversée de manière continue dans la direction longitudinale du tube de verre pour former un premier barreau de verre à former en une partie de coeur ou une partie d'une partie de coeur d'une fibre optique,

où le tube de verre a une concentration en métal alcalin maximale de 500 à 20 000 ppm atomique, une concentration de chlore maximale de 10 à 1000 ppm atomique, et une concentration en fluor maximale de 0 à 10 000 ppm atomique, et

dans lequel, lors de l'étape d'attaque, la température maximale de la surface externe du tube de verre se situe dans la plage s'étendant de 1900 °C à 2250 °C, et le temps de chauffage est fixé à un temps égal ou inférieur à un temps (en minutes) donné par (7 - (concentration en métal alcalin en ppm)/5000).

2. Procédé de production d'une préforme de fibre optique qui comprend une partie de coeur et une partie de gaine, la préforme de fibre optique étant composée d'un verre à base de silice, le procédé comprenant les étapes suivantes :

une étape d'attaque comprenant de chauffer un tube de verre à base de silice ayant la surface interne dopée avec un élément métallique alcalin au moyen d'une source de chaleur traversée de manière continue dans la direction longitudinale du tube de verre pour attaquer la partie de surface interne de 5 % ou plus de l'épaisseur d'une région où l'élément métallique alcalin est diffusé tandis qu'un gaz d'attaque est autorisé à s'écouler dans le tube de verre ; et

après l'étape d'attaque, une étape de compactage comprenant de compacter le tube de verre en chauffant le tube de verre avec une source de chaleur traversée de manière continue dans la direction longitudinale du tube de verre pour former un premier barreau de verre à former en une partie de coeur ou une partie d'une partie de coeur d'une fibre optique,

où le tube de verre a une concentration en métal alcalin maximale de 500 à 20 000 ppm atomique, une concentration de chlore maximale de 0 à 1000 ppm atomique, et une concentration en fluor maximale de 0 à 10 000 ppm atomique, et

dans lequel, lors de l'étape d'attaque, la température maximale de la surface externe du tube de verre se situe dans la plage s'étendant de 1900 °C à 2250 °C, et la vitesse transversale de la source de chaleur se situe dans la plage s'étendant de 50 mm/min à 100 mm/min.

3. Procédé selon la revendication 1 ou la revendication 2, dans lequel, lors de l'étape d'attaque, la partie de surface interne du tube de verre est gravée de 5 % à 25 % de l'épaisseur de la région où l'élément métallique alcalin est diffusé.

4. Procédé selon l'une quelconque des revendications 1 à 3, dans lequel, lors de l'étape d'attaque, une pression à l'intérieur du tube de verre est de 0,1 à 1 kPa supérieure à une pression hors du tube de verre.

5. Procédé selon l'une quelconque des revendications 1 à 4,
dans lequel la valeur maximale de la différence d'indice de réfraction relatif du premier barreau de verre se situe dans la plage s'étendant de -0,1 % à +0,1 %, et le procédé comprend en outre les étapes suivantes :

une étape de formation d'une partie de gaine comprenant de former une partie de gaine optique ou une partie d'une partie de gaine optique autour du périmètre du premier barreau de verre,

où la valeur minimale de la différence d'indice de réfraction relatif de la partie de gaine optique se situe dans la plage s'étendant de -0,2 % à -0,5 %.

6. Procédé selon l'une quelconque des revendications 1 à 4, comprenant en outre les étapes suivantes :

une étape d'extension du diamètre de la partie de coeur comprenant d'arranger un verre de silice ayant une concentration en chlore de 1000 ppm atomique à 15 000 ppm atomique autour du périmètre du premier barreau de verre formé lors de l'étape de compactage pour former un second barreau de verre à former en une partie de coeur ou une partie d'une partie de coeur d'une fibre optique.

7. Procédé selon la revendication 6,

dans lequel la valeur maximale de la différence d'indice de réfraction relatif du second barreau de verre se situe dans la plage s'étendant de -0,1 % à +0,1 %, et le procédé comprend en outre les étapes suivantes :

une étape de formation d'une partie de gaine comprenant de former une partie de gaine optique ou une partie d'une partie de gaine optique autour du périmètre du second barreau de verre,
où la valeur minimale de la différence d'indice de réfraction relatif de la partie de gaine optique se situe dans la plage s'étendant de -0,2 % à -0,5 %.

## FIG. 1

```
          START

    ALKALI METAL ADDITION      ~S1
          STEP

    DIAMETER REDUCTION         ~S2
          STEP

       ETCHING STEP            ~S3

       COLLAPSE STEP           ~S4

      ELONGATION STEP          ~S5

     FIRST PERIMETER           ~S6
     GRINDING STEP

    CORE PART DIAMETER         ~S7
    EXTENSION STEP

     SECOND PERIMETER          ~S8
     GRINDING STEP

     CLADDING PART             ~S9
     FORMATION STEP

    JACKET FORMATION           ~S10
          STEP

           END
```

FIG. 2A

FIG. 2B

FIG. 2C

## FIG. 2D

## FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007504080 PCT
- JP 20095411796 PCT
- US 20050144986 A